# EUROPEAN PATENT APPLICATION

(11) **EP 1 517 577 A1**
(43) Date of publication of application: **23.03.2005**
(21) Application number: 03733355.6
(22) Date of filing: 11.06.2003
(51) Int. Cl.: H04Q 9/00

(54) **INFORMATION PROCESSING SYSTEM, DEVICE CONTROL METHOD THEREOF, AND PROGRAM THEREOF**

(30) Priority: 26.06.2002 JP 2002185757
(71) Applicant: MATSUSHITA ELECTRIC INDUSTRIAL CO., LTD., Kadoma-shi, Osaka 571-8501 (JP)
(72) Inventor: MAEKAWA, Hajime, Osaka-shi, Osaka 547-0005 (JP); IWAMOTO, Koji, Nara-shi, Nara 631-0034 (JP); IKEDA, Takumi, Kobe-shi, Hyogo 651-0053 (JP); TAKECHI, Hideaki, Toyonaka-shi, Osaka 560-0012 (JP); HIROSE, Koji, Hirakata-shi, Osaka 573-1122 (JP)
(74) Representative: Balsters, Robert
(86) International application number: PCT/JP2003/007402
(87) International publication number: WO 2004/004406

(57) **Abstract**

An information processing system in which access device (14) transmits a transmission command to server device (13); receives electronic device access information from server device (13); instructs electronic device (11) to transmit operation screen information which is the information to configure a screen for operating electronic device (11) or another electronic device; receives the operation screen information from electronic device (11); and transmits device operation information to electronic device (11).

## Description

### TECHNICAL FIELD

The present invention relates to an information processing system which enables the programming of device operation information of an electronic device and operation of the device from outside, and also relates to a device control method used in the system and to a program for implementing the method.

### BACKGROUND ART

The conventional information processing systems capable of programming device operation information of an electronic device and operating the device from outside generally operate as follows. In a case where a VCR in home is preprogrammed for recording from an external device such as a portable terminal, the external device having information to communicate with the VCR accesses the VCR based on the information, and then transmits the information about the preprogrammed recording that the user has entered.

However, in the aforementioned conventional technique, for example when the VCR is upgraded and the information to communicate with the VCR is changed, the latest information has to be programmed one by one in the external device such as a portable terminal. In addition, it is not good in terms of security that the VCR in home can be easily accessed from outside.

Furthermore, for example, in a case where the external device communicates with the VCR based on TCP (transmission control protocol)/IP (internet protocol), the global IP address (Global Internet Protocol Address), which is the information to communicate with the VCR, is not necessarily fixed and may be assigned dynamically according to a protocol such as PPP (Point-to-Point Protocol) or DHCP (Dynamic Host Configuration Protocol). In that case, the global IP address dynamically changes due to various factors, such as the operation of the server by an ISP (Instruction Set Processor) or a temporary disconnection in communication. In addition, even when the global IP address is identified, a port number, which is required for the communication with the VCR, may be dynamically changed by an internet address translation function provided in an ADSL router (Asymmetric Digital Subscriber Line Router). Such a translation function has been spread as NAPT (Network Address and Port Translation) or IP masquerade function.

In order to access a device having a dynamically changing global IP address and port number from outside (e.g., outside the home), it has been necessary to identify the current global IP address and port number in some way. One such conventional technique for this purpose is DynamicDNS server (Dynamic Domain Name System Server). The DynamicDNS server notifies the current global IP address of a device to a client terminal by using the DNS protocol defined by RFC (Request for Comments), which is a standard specification in the Internet, thereby allowing the client terminal to access the device in home. However, the DNS protocol is a system for notifying a global IP address, not the current port number. In addition, the DynamicDNS server has a cache which makes the nearest server offer the address, so that in the case of a device whose address dynamically changes, it sometimes happens that the cached information is not the latest and that an invalid address is notified.

### SUMMARY OF THE INVENTION

The present invention is an information processing system including an electronic device, a server device and an access device which accesses the electronic device, wherein
(A) the electronic device includes:
   (A-1) an operation screen information storage part which stores operation screen information that is information to configure a screen for operating one of the electronic device and another electronic device;
   (A-2) an operation screen information transmission part which transmits the operation screen information at a request of the access device;
   (A-3) a device operation screen information reception part which honors device operation information from the access device; and
   (A-4) a device drive part which operates based on the device operation information that the device operation screen information reception part has honored,
(B) the server device includes:
   (B-1) an access information management part which has a record containing an access device identifier that is information to identify the access device, and electronic device address information that is information to access the electronic device;
   (B-2) a transmission command reception part which receives a transmission command having the access device identifier from the access device; and
   (B-3) an electronic device access information transmission part for transmitting electronic device access information, which has the electronic device address information corresponding to the access device identifier contained in the transmission command that the transmission command reception part has received, to the access device, and
(c) the access device includes:
   (C-1) an access device identifier storage part which stores the access device identifier that is the information to identify the access device;
   (C-2) a server device identifier storage part which stores a server device identifier that is information to identify the server device;
   (C-3) an access request honoring part which honors an access request to the server device;
   (C-4) a transmission command transmission part which transmits the transmission command to the server device identified by the server device identifier that the server device identifier storage part stores when the access request honoring part has honored the access request, the transmission command having the access device identifier and directing transmission of the electronic device access information which is the information to access the electronic device;
   (C-5) an electronic device access information reception part which receives the electronic device access information that the server device has transmitted in response to the transmission command;
   (C-6) an operation screen information reception part which instructs the electronic device to transmit the operation screen information based on the electronic device access information that the electronic device access information reception part has received, and receives the operation screen information;
   (C-7) an operation screen display part which displays an operation screen based on the operation screen information that the operation screen information reception part has received;
   (C-8) a device operation information honoring part which honors the device operation information entered based on the operation screen that the operation screen display part has displayed; and
   (C-9) a device operation screen information transmission part which transmits the device operation information to the electronic device.

The present invention is also a device control method used in an information processing system having an electronic device, a server device and an access device which accesses the electronic device, the device control method including the steps of:
(a) honoring an access request to the server device by using the access device;
(b) transmitting a transmission command to the server device identified by a previously stored server device identifier by using the access device, the transmission command having an access device identifier and directing transmission of electronic device access information which is information to access the electronic device;
(c) acquiring electronic device address information corresponding to the access device from the electronic device access information stored, by using the server device;
(d) transmitting the electronic device access information containing the electronic device address information to the access device by using the server device;
(e) receiving the electronic device access information by using the access device;
(f) instructing the electronic device to transmit operation screen information based on the electronic device access information received, by using the access device;
(g) transmitting the operation screen information stored in response to a transmission instruction of the access device by using the electronic device;
(h) receiving the operation screen information by using the access device;
(i) displaying an operation screen based on the operation screen information received, by using the access device;
(j) honoring an input of device operation information of the electronic device in accordance with the operation screen, by using the access device;
(k) transmitting the device operation information to the electronic device by using the access device;
(l) receiving the device operation information by using the electronic device; and
(m) operating the electronic device based on the device operation information.

Such a device control method enables easy and safe programming and operation of the device operation information of an electronic device from outside, and can securely support a device having a dynamically changing global IP address and port number.

### BRIEF DESCRIPTION OF THE DRAWINGS

Fig. 1 is a block diagram showing an information processing system according to an embodiment of the present invention.
Fig. 2 is a block diagram showing the information processing system according to the embodiment of the present invention.
Fig. 3 is a flowchart showing operations of an electronic device according to the embodiment of the present invention.
Fig. 4 is a flowchart showing operations of a server device according to the embodiment of the present invention.
Fig. 5 is a flowchart showing operations of an access device according to the embodiment of the present invention.
Fig. 6 is a specific block diagram of the information processing system according to the embodiment of the present invention.
Fig. 7 is a view showing an access information management table according to the embodiment of the present invention.

Fig. 8 is a view showing information on menus and panels stored in the electronic device according to the embodiment of the present invention.

Fig. 9 is a view showing a flow of operations of the information processing system according to the embodiment of the present invention.

### DETAILED DESCRIPTION OF PREFERRED EMBODIMENT

An embodiment of the present invention will be described as follows with reference to accompanying drawings. In the embodiment, components having the same function and flowchart steps having the same contents as each other are referred to with the same reference numerals, and their description will not be repeated.

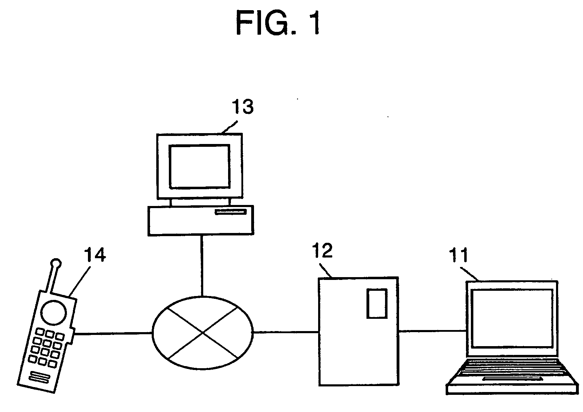

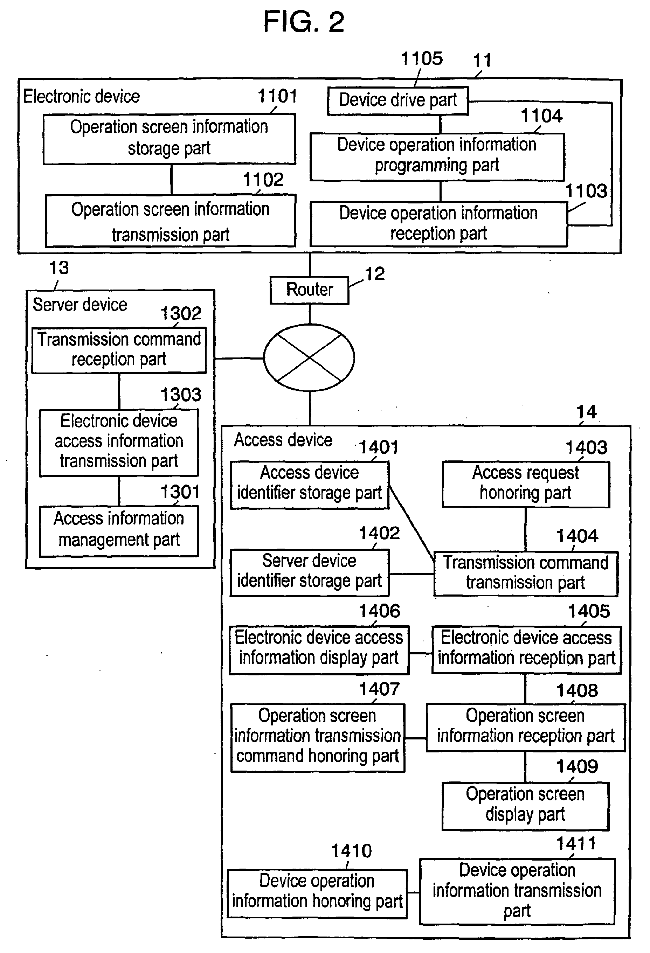

Fig. 1 shows a block diagram of an information processing system according to the present embodiment. The information processing system includes electronic device 11, router 12, server device 13 and access device 14. Fig. 2 shows a block diagram of the information processing system according to the present embodiment.

Electronic device 11 includes operation screen information storage part 1101, operation screen information transmission part 1102, device operation information reception part 1103, device operation information programming part 1104 and device drive part 1105.

Router 12 functions to connect electronic device 11 to the Internet, and is provided with a route control function and NAT (Network Address Transition) function.

Server device 13 includes access information management part 1301, transmission command reception part 1302 and electronic device access information transmission part 1303.

Access device 14 includes access device identifier storage part 1401, server device identifier storage part 1402, access request honoring part 1403, transmission command transmission part 1404, electronic device access information reception part 1405, electronic device access information display part 1406, operation screen information transmission command honoring part 1407, operation screen information reception part 1408, operation screen display part 1409, device operation information honoring part 1410 and device operation information transmission part 1411.

Operation screen information storage part 1101 stores operation screen information, which is the information to configure a screen for operating electronic device 11 or other electronic devices. The term "operation screen information" indicates the information to configure user interface (e.g., menu or panel) for preprogramming a VCR for recording when the electronic device which the user would like to operate is the VCR. The operation screen information is written in C-HTML (Compact Hypertext Markup Language), HTML (Hypertext Markup Language) or the like. On the other hand, when the electronic device which the user would like to operate is a computer and he/she would like to call up an image album in the computer, the operation screen information is the information to configure a menu screen or a panel for displaying or retrieving the image album. Although operation screen information storage part 1101 is preferably implemented by a nonvolatile recording medium, it may be implemented by a volatile recording medium.

Operation screen information transmission part 1102 acquires operation screen information stored in operation screen information storage part 1101 at the request of access device 14. For example, operation screen information transmission part 1102 selects one from two or more types of operation screen information. It goes without saying that when only one type of operation screen information is stored, there is no need of selection. Then, operation screen information transmission part 1102 transmits the operation screen information to access device 14 via router 12. Operation screen information transmission part 1102 is generally implemented by wireless or wire communication means (e.g., a network card and its device driver), but may be implemented by a broadcast means.

Device operation information reception part 1103 receives device operation information from access device 14 via router 12. Device operation information reception part 1103 is generally implemented by wireless or wire communication means (e.g., a modem and its device driver), but can be implemented by a broadcast receiving means (e.g., a tuner and its device driver). In a case where device operation information reception part 1103 is implemented by a communication means, device operation information reception part 1103 and operation screen information transmission part 1102 are generally implemented by physically the same means.

Device operation information programming part 1104 stores the device operation information that device operation information reception part 1103 has received in a recording medium. In general, device operation information programming part 1104 performs storage in a nonvolatile recording medium; however, it is possible to perform temporary storage in a volatile recording medium. The recording medium may be either contained in an electronic device or externally provided. The device operation information may be used by electronic device 11 for its operation, or by an other electronic device connected with electronic device 11 by being read (or received). In a case where electronic device 11 is what is called a home server (Home Information Server), and the other electronic device is a VCR or computer connected with the home server, the other electronic device connected with electronic device 11 may use the device operation information. Device operation information programming part 1104 is generally implemented by software, but may be implemented by hardware.

Device drive part 1105 operates based on the device operation information that device operation information reception part 1103 has received. When device operation information programming part 1104 stores device operation information, device drive part 1105 operates based on the device operation information stored. The operation differs depending on the contents of the device operation information. When the device operation information indicates to preprogram a VCR for recording, the operation means recording.

Access information management part 1301 stores a record containing an access device identifier which is the information to identify access device 14, and electronic device address information which is the information to access electronic device 11. A table having the record is called an access information management table. When access device 14 is a portable phone, the access device identifier is the number of the portable phone. When access device 14 is a computer connected with the Internet, the access device identifier is the global IP address of the computer. The access device identifier may also be a user identifier for identifying the user having the access device. The user identifier is, e.g., what is called a login identifier and password. The user identifier is, e. g. , the information the user has entered by using the input means of the access device. The electronic device address information is, e.g., a global IP address for the communication with electronic device 11. The global IP address is, e.g., the global IP address assigned to router 12. However, when electronic device 11 is connected with the Internet directly without router 12, the electronic device address information is, e.g., the global IP address assigned to electronic device 11. The electronic device address information is, e.g., a set of a global IP address and a port number. The electronic device address information is updated to the latest by making electronic device 11 store it as appropriate to the server device. Access information management part 1301 is preferably implemented by a nonvolatile recording medium, but may be implemented by a volatile recording medium.

Transmission command reception part 1302 receives a transmission command having the access device identifier from access device 14. The term "transmission command" indicates a command to instruct electronic device 11 to transmit the electronic device access information, which is the information to access electronic device 11. Transmission command reception part 1302 is generally implemented by a wireless or wire communication means (e. g. , a modem and its device driver, or a network card and its device driver), but can be implemented by a broadcast receiving means.

Electronic device access information transmission part 1303 acquires from access information management part 1301 the electronic device address information corresponding to the access device identifier contained in the transmission command that transmission command reception part 1302 has received. Electric device access information transmission part 1303 then configures electronic device access information having the electronic device address information, and then transmits it to access device 14. The electronic device access information may consist of electronic device address information only. Electronic device access information transmission part 1303 is generally implemented by wireless or wire communication means (e.g., a network card and its device driver), but can be implemented by a broadcast means. In a case where electronic device access information transmission part 1303 is implemented by a communication means, electronic device access information transmission part 1303 and transmission command reception part 1302 are generally implemented by physically the same means.

Access device identifier storage part 1401 stores the access device identifier for identifying access device 14. Access device identifier storage part 1401 is preferably implemented by a nonvolatile recording medium, but may be implemented by a volatile recording medium. When the access device identifier is information entered by the user (e.g. , a login identifier and password), access device identifier storage part 1401 is preferably a nonvolatile recording medium.

Server device identifier storage part 1402 stores a server device identifier which is the information to identify server device 13. Server device identifier storage part 1402 is preferably implemented by a nonvolatile recording medium, but may be implemented by a volatile recording medium.

Access request honoring part 1403 honors an access request to access server device 13. Access request honoring part 1403 honors, e.g., an access request to access server device 13 from the user of access device 14. When access device 14 is a portable phone, the access request is generally entered by ten-key pad. When access device 14 is a computer, the access request is entered by keyboard or mouse. Therefore, access request honoring part 1403 is an input part such as a ten-key pad or a keyboard, and a device driver for controlling them. Access request honoring part 1403 may receive a command indicating to access server device 13 from another device.

When access request honoring part 1403 has honored an access request, transmission command transmission part 1404 transmits to the server device, which is identified by the server device identifier stored in server device identifier storage part 1402, a transmission command which is the command to direct the transmission of electronic device access information that is the information to access electronic device 11. The transmission command contains an access device identifier. Transmission command transmission part 1404 is generally implemented by wireless or wire communication means (e.g., a network card and its device driver), but can be implemented by a broadcast means.

Electronic device access information reception part 1405 receives the electronic device access information that server device 13 has transmitted in response to the transmission command. Electronic device access information reception part 1405 is generally implemented by wireless or wire communication means (e.g., a network card and its device driver) , but can be implemented by a broadcast receiving means.

Electronic device access information display part 1406 displays some or all of the electronic device access information that electronic device access information reception part 1405 has received. Electronic device access information display part 1406 can be implemented by a display for displaying data and software for controlling the data.

Operation screen information transmission command honoring part 1407 honors an input with respect to the electronic device access information that electronic device access information display part 1406 has displayed. Operation screen information transmission command honoring part 1407 is formed of an input part and software, and the input part is generally identical with access request honoring part 1403.

When operation screen information transmission command honoring part 1407 has honored an input, operation screen information reception part 1408 instructs electronic device 11 to transmit operation screen information based on the input, and receives the operation screen information. Operation screen information reception part 1408 is generally implemented by wireless or wire communication means (e.g., a network card and its device driver), but can be implemented by a broadcast means and a broadcast receiving means.

Operation screen display part 1409 displays an operation screen based on the operation screen information that operation screen information reception part 1408 has received. Operation screen information display part 1409 can be implemented by, e.g., a display and software for controlling data display. Operation screen display part 1409 and electronic device access information display part 1406 may be implemented by physically the same means.

Device operation information honoring part 1410 honors device operation information entered based on the operation screen that operation screen information display part 1409 has displayed. Device operation information honoring part 1410 generally honors an input from the user of access device 14. The input of the device operation information can be either a selection of a menu item, or a data entry by keyboard or the like. Device operation information honoring part 1410 is formed of an input part and software, and the input part is generally identical with access request honoring part 1403 and operation screen information transmission command honoring part 1407.

Device operation information transmission part 1411 transmits the device operation information, which device operation information honoring part 1410 has honored, to electronic device 11. The device operation information that device operation information transmission part 1411 transmits is not necessarily identical with the device operation information that device operation information honoring part 1410 has honored, and these information may differ in data format or the like. Device operation information transmission part 1411 is generally implemented by wireless or wire communication means (e.g., a network card and its device driver) , but can be implemented by a broadcast means. In a case where device operation information transmission part 1411 is implemented by a communication means, device operation information transmission part 1411, transmission command transmission part 1404, electronic device access information reception part 1405 and operation screen information reception part 1408 are generally implemented by physically the same means.

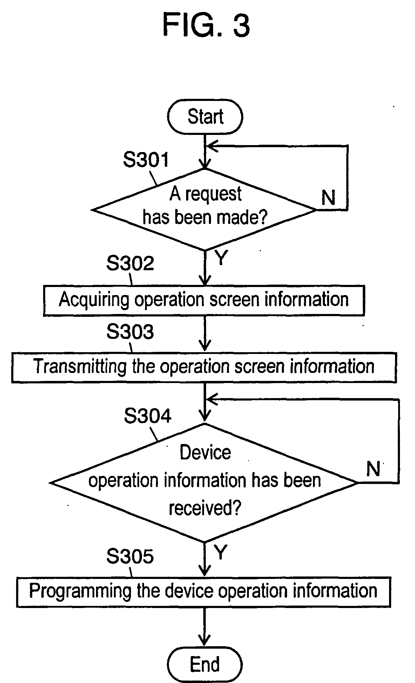

The following is a description of the behavior of the information processing system of the present embodiment. First of all, the behavior of electronic device 11 will be described with reference to the flowchart shown in Fig. 3.

(Step S301) Operation screen information transmission part 1102 determines whether a transmission request for operation screen information has been made by access device 14 or not. When the request has been made, the process goes to Step S302; otherwise, operation screen information transmission part 1102 waits for the request.

(Step S302) Operation screen information transmission part 1102 acquires operation screen information from operation screen information storage part 1101.

(Step S303) Operation screen information transmission part 1102 transmits the operation screen information acquired at Step S302.

(Step S304) Device operation information reception part 1103 determines whether device operation information has been received from access device 14 or not. When the information has been received, the process goes to Step S305; otherwise, device operation information reception part 1103 waits for the information.

(Step S305) Device operation information programming part 1104 stores the device operation information received at Step S304 in a recording medium. The device operation information stored can be utilized in the following cases:
1) A case where device drive part 1105 drives electronic device 11 by utilizing the device operation information stored.
2) A case where device drive part 1105 drives a device connected with electronic device 11 via a network by utilizing the device operation information.
3) A case where device operation information programming part 1104 temporarily holds device operation information in memory, and device drive part 1105 starts to operate immediately based on the device operation information.
4) A case where device operation information programming part 1104 does not function, and device drive part 1105 starts to operate immediately based on the device operation information that device operation information reception part 1103 has received.

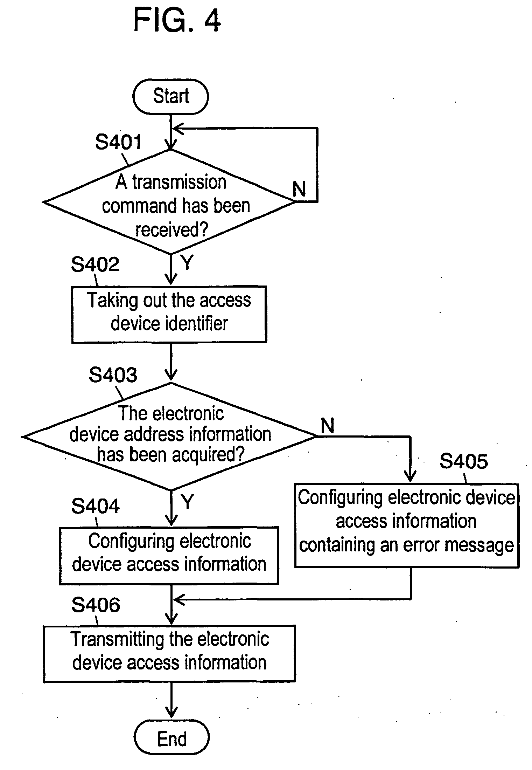

The following is a description of the behavior of server device 13, with reference to the flowchart shown in Fig. 4.

(Step S401) Transmission command reception part 1302 determines whether a transmission command having an access device identifier has been received from access device 14 or not. When the transmission command has been received, the process goes to Step S402; otherwise, transmission command reception part 1302 waits for the command.

(Step S402) Electronic device access information transmission part 1303 takes out the access device identifier from the transmission command received at Step S401.

(Step S403) Electronic device access information transmission part 1303 searches access information management part 1301 by using the access device identifier as a key. As a result of the search, when the electronic device address information corresponding to the access device identifier has been acquired, the process goes to Step S404; otherwise, it goes to Step S405.

(Step S404) Electronic device access information transmission part 1303 configures electronic device access information containing the electronic device address information acquired at Step S403. The electronic device access information and the electronic device address information may be the same as each other. In that case, nothing is done at this step.

(Step S405) Electronic device access information transmission part 1303 configures electronic device access information containing an error message. The error message indicates that there is no electronic device 11 accessible from access device 14.

(Step S406) Electronic device access information transmission part 1303 transmits the electronic device access information configured at Step S404 or S405 to access device 14.

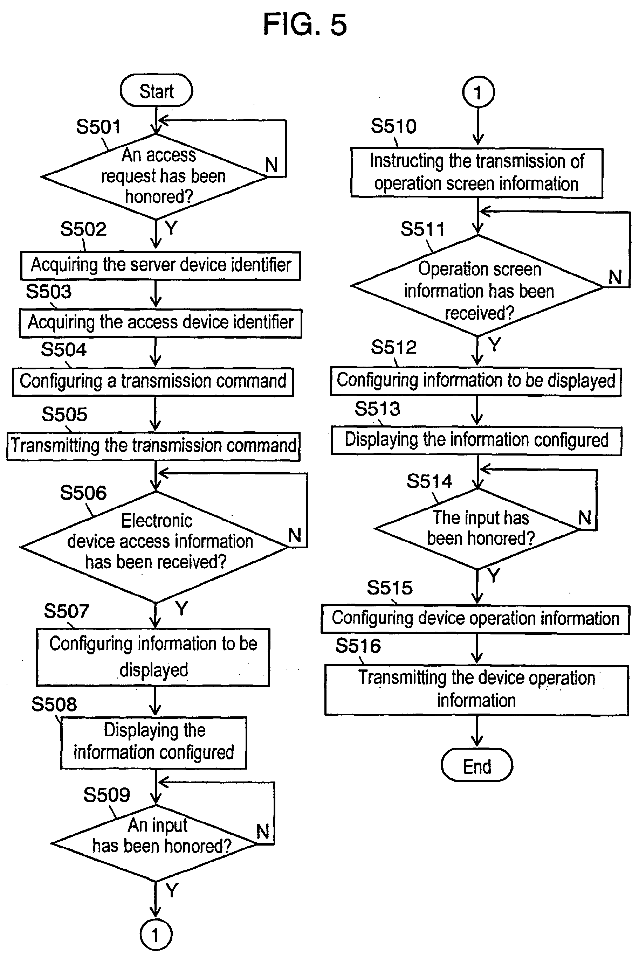

The following is a description of the behavior of access device 14, with reference to the flowchart shown in Fig. 5.

(Step S501) Access request honoring part 1403 determines whether an access request to access server device 13 has been honored or not. When the access request has been honored, the process goes to Step S502; otherwise access request honoring part 1403 waits for the request.

(Step S502) Transmission command transmission part 1404 acquires an access device identifier from access device identifier storage part 1401.

(Step S503) Transmission command transmission part 1404 acquires a server device identifier from server device identifier storage part 1402.

(Step S504) Transmission command transmission part 1404 configures a transmission command by using the access device identifier acquired at Step S502. When the transmission command is composed of the access device identifier only, nothing is done at Step S504.

(Step S505) Transmission command transmission part 1404 transmits the transmission command configured at Step S504 to server device 13 identified by the server device identifier acquired at Step S503.

(Step S506) Electronic device access information reception part 1405 determines whether electronic device access information has been received or not. When the information has been received, the process goes to Step S507; otherwise, electronic device access information reception part 1405 waits for the information.

(Step S507) Electronic device access information display part 1406 configures information to be displayed (e.g., menu information) by using the electronic device access information received at Step S506.

(Step S508) Electronic device access information display part 1406 displays the information configured at Step S507. As a result, e.g., a menu is displayed on the display.

(Step S509) Operation screen information transmission command honoring part 1407 determines whether an appropriate input with respect to the information displayed at Step S508 has been honored or not. When the input has been honored, the process goes to Step S510; otherwise, operation screen information transmission command honoring part 1407 waits for the input.

(Step S510) Operation screen information reception part 1408 instructs electronic device 11 to transmit operation screen information. In other words, operation screen information reception part 1408 transmits a command directing the transmission of the operation screen information. The transmission of the operation screen information may be directed by another means.

(Step S511) Operation screen information reception part 1408 determines whether operation screen information has been received or not. When the operation screen information has been received, the process goes to Step S512; otherwise operation screen information reception part 1408 waits for the information.

(Step S512) Operation screen display part 1409 configures information to be displayed from the operation screen information received at Step S511. This information is, e.g., menu information to instruct the user to operate.

(Step S513) Operation screen display part 1409 displays the information configured at Step S512.

(Step S514) Device operation information honoring part 1410 receives the device operation information entered based on the information displayed at Step S513. When the information has been received, the process goes to Step S515; otherwise device operation information honoring part 1410 waits for the information. The input of the device operation information may be just to select a menu item, or may be to program information (e.g., time or information about preprogrammed recording) in a device by keyboard or the like.

(Step S515) Device operation information transmission part 1411 configures device operation information to be transmitted, based on the input honored at Step S514.

(Step S516) Device operation information transmission part 1411 transmits the device operation information to be transmitted, configured at Step S515.

In the flowchart shown in Fig. 5, Step S507 to Step S509 are not essential. In other words, it is not necessary to display all or some of the electronic device access information in access device 14 or to direct the transmission of the operation screen information based on the user's instruction. Instead, it is possible to use electronic device access information containing electronic device address information, which indicates that URL (Uniform Resource Locators) containing the global IP address of electronic device 11 is transmitted to access device 14, and after a certain time period there is an automatic jump to the page (data described in HTML) shown by the URL. As a result, the process can proceed to the next step (the operation of instructing the electronic device to transmit operation screen information) without the user's instruction.

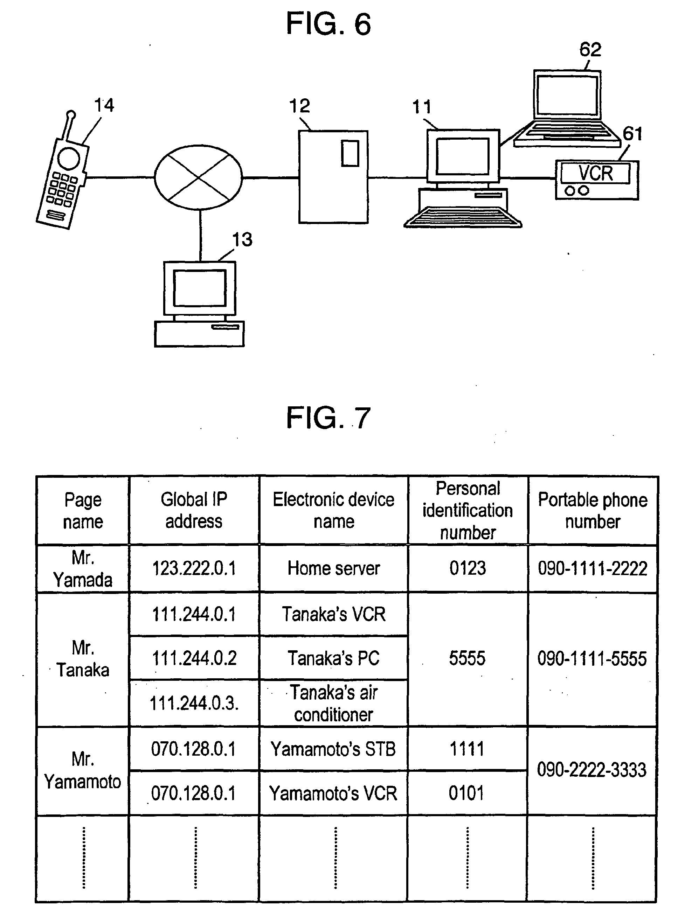

The following is a description of the specific behavior of the information processing system according to the present embodiment. The specific block diagram of the information processing system will be shown in Fig. 6. The information processing system includes electronic device 11, router 12, server device 13, access device 14, VCR 61 and personal computer 62. Electronic device 11 is a server device in home (what is called a home server). Home server 11 can communicate with a device connected with the Internet via router 12. Server device 13 is an information processing device of a service provider (also called an ISP (instruction set processor)) connected with the Internet. Access device 14 is a portable phone, which is movable. In this information processing system, it is possible for portable phone 14 to access home server 11, while securing the security of home server 11. The following are specific operations of the system and data examples.

Now, server device 13 holds an access information management table as shown in Fig. 7. The access information management table stores a record containing "page name", "global IP address", "electronic device name", "personal identification number" and "portable phone number". The access information management table may be a table either in unnormalized form as shown in Fig. 7 or in normalized form. The "page name" indicates the title of the page displayed on portable phone 14, and is displayed on the screen of portable phone 14. The "global IP address" is the information to communicate with electronic device 11. It is possible to communicate with electronic device 11 by using a set of "global IP address" and "port number" instead of the "global IP address". The "electronic device name" is the title to identify electronic device 11, and can be recognized by the user. The "personal identification number" is the number to be entered to make a connection for communication with electronic device 11 which can be communicated by the "global IP address". The "portable phone number" is the phone number to identify portable phone 14.

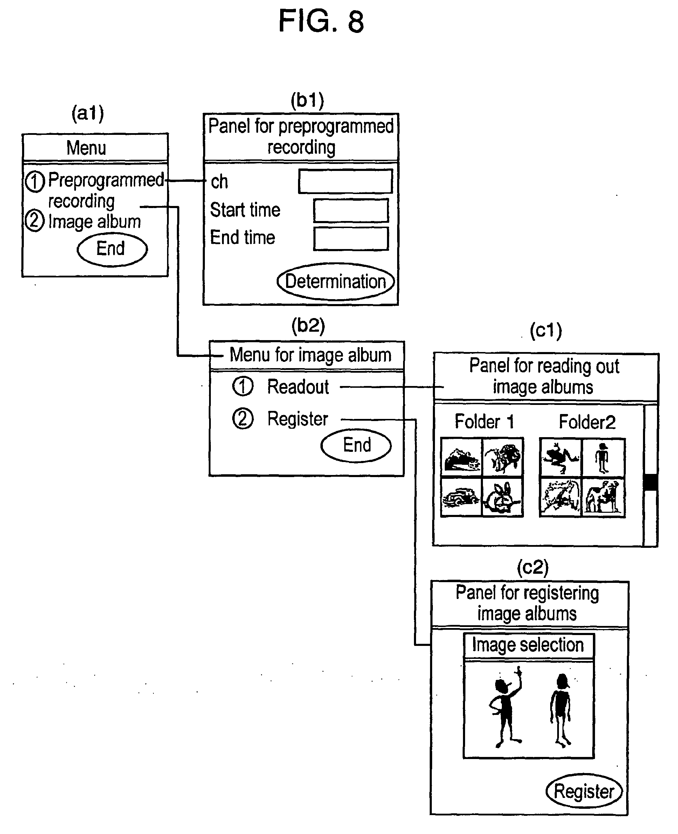

The home server stores the information of the menus and panels shown in Fig. 8. Fig. 8 shows menus and panels for portable phone 14 to access and operate VCR 61 and personal computer 62 connected with home server 11. The menus and panels shown in Fig. 8 have a hierarchical structure. For example, as shown in Fig. 8 (a1), the top panel has two menu items ("preprogrammed recording" and "image album") and an End button. When the menu item "preprogrammed recording" has been selected, the process goes to "panel for preprogrammed recording" shown in Fig. 8 (b1). The "panel for preprogrammed recording" is a panel for preprogramming VCR 61 for recording. When "ch (channel)", "start time" and "end time" on the "panel for preprogrammed recording" are entered, and a Determination button is pressed, the data is programmed in home server 11 to preprogram VCR 61 for recording. On the other hand, in Fig. 8 (a1), when the menu item "image album" has been selected, the process proceeds to "menu for image album" in Fig. 8 (b2). When the menu item "readout" has been selected, as shown in Fig. 8 (c1), the picture (image) selected from personal computer 62 is read out and displayed on personal phone 14. On the other hand, when the menu item "register" has been selected, as shown in Fig. 8 (c2), the picture is registered to personal computer 62 from portable phone 14 via home server 11. If the End button is pressed, the display of the menu is terminated. Thus, when the menu item "image album" has been selected, the electronic device (home server) immediately starts to operate based on the device operation information that the device operation information reception part of the device has received. In other words, the picture is called up and registered.

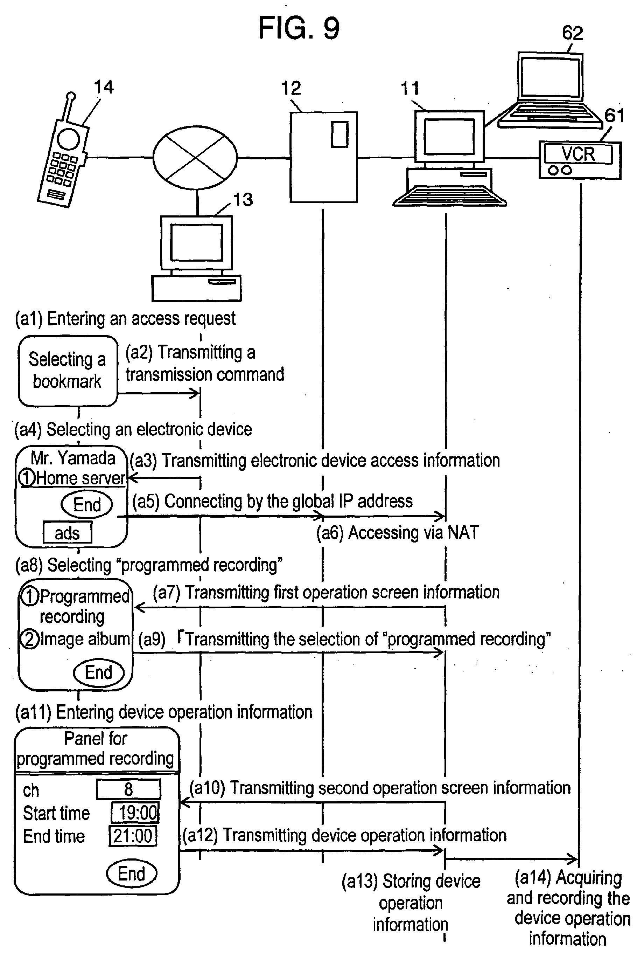

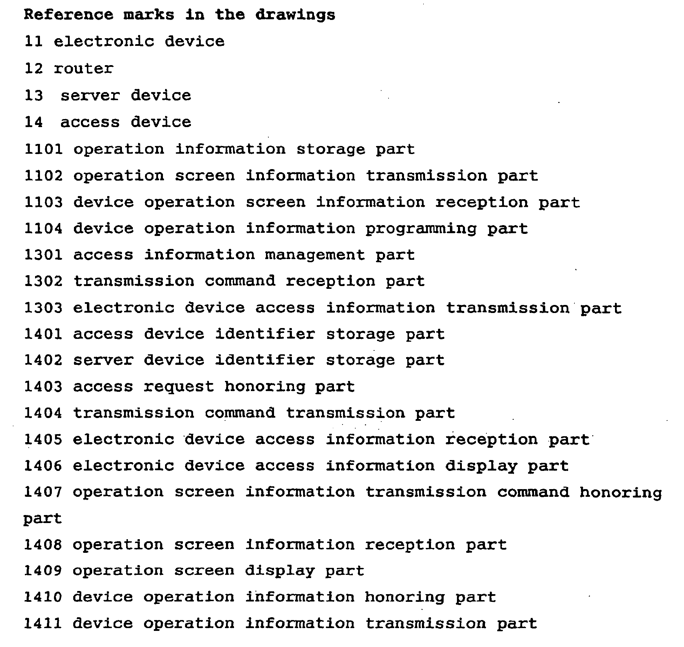

The following is a detailed description of the aforementioned operation flow. The specific behavior of the information processing system of the present embodiment will be described with Fig. 9. First of all, the user of portable phone 14 enters an access request to access server device 13. This access request is performed by selecting a bookmark which is registered for a server device identifier (URL for accessing server device 13) (Fig. 9 (a1)). Portable phone 14 transmits a transmission command containing the phone number of its own, "090-1111-2222" to server device 13 (Fig. 9 (a2)). Server device 13 searches the access information management table shown in Fig. 7 by using the phone number "090-1111-2222" as a key, and transmits electronic device access information (Mr. Yamada's page) containing "page name", "global IP address", "electronic device name" and "personal identification number" to portable phone 14 (Fig. 9 (a3) ) . In that case, server device 13 also transmits the advertising information stored therein. Portable phone 14 receives the electronic device access information, and displays some or all of the information. At that moment, portable phone 14 also displays the advertising information received. The user selects electronic device 11 that he/she would like to access (Fig. 9 (a4)). Fig. 9 illustrates only one accessible electronic device; however, it goes without saying that a plurality of accessible electronic devices can be provided. Although it is not illustrated in Fig. 9, the selection at Fig. 9 (a4) is possible by entering the personal identification number "0123".

Since the home server has been selected, portable phone 14 makes a connection to router 12 identified by the global IP address "123.222.0.1" (Fig. 9 (a5)) to access home server 11 in home via static forward function of NAT of router 12 (Fig. 9 (a6)). Home server 11 transmits stored first operation screen information to portable phone 14 via router 12 (Fig. 9 (a7)). Portable phone 14 receives the first operation screen information, and displays the menu. When the user has selected "preprogrammed recording" (Fig. 9 (a8)), portable phone 14 transmits the information indicating that "preprogrammed recording" has been selected to home server 11 via router 12 (Fig. 9 (a9)). Home server 11 transmits second operation screen information to portable phone 14 via router 12 (Fig. 9 (a10)). The second operation screen information is the information to configure the panel for preprogrammed recording shown in Fig. 8. Portable phone 14 receives and displays the second operation screen information. The user inputs information about preprogrammed recording (containing "ch", "start time" and "end time")(Fig. 9 (a11)). When the user presses (selects) the Determination button, device operation information (e.g., "ch = 8", "start time = 19:00" and "end time = 21:00") is transmitted to home server 11 via router 12 (Fig. 9 (a12)). Homer server 11 stores device operation information (Fig. 9 (a13)). VCR 61 acquires the device operation information from home server 11 and performs recording (Fig. (a14)).

Thus, the present embodiment enables an easy access to a specific electronic device from outside, while securing the security. The specific electronic device, for example, can be a computer, a VCR, a refrigerator or any other electronic device in home. The present embodiment also enables the server device to provide an access device such as a portable phone with a dynamically changing global IP address and port number of a specific electronic device by information written in HTML or the like, thereby allowing the specific electronic device to be accessed without changing at all the existing browser or the like of the portable phone. Since the access device such as a portable phone first makes a connection to the server device in which the address of an electronic device has been registered, no mismatch occurs in cache as in dynamic DNS.

Although the present embodiment takes up a global IP address in IPVer4 (Internet Protocol Version 4), a global IP address in IPVer6 (Internet Protocol Version 6) or other forms of global IP addresses may be used. As the information to designate the communication destination, a global IP address is used in the present embodiment, but other forms of information may be used instead.

In the present embodiment, a router is used, but it is not an essential component. In other words, the electronic device may be connected directly to a network such as the Internet.

In the present embodiment, the home server is taken up as an example of the electronic device, and the device operation information is described as information used to operate a device other than the home server, such as the VCR or the computer. However, it is possible that the electronic device is the VCR, and the device operation information is information that the electronic device itself uses.

In the present embodiment, the device operation information is transmitted from the access device to the electronic device after operation screen information is transmitted a plurality of number of times from the electronic device to the access device. Alternatively, it is possible to transmit the device operation information from the access device to the electronic device after the operation screen information is transmitted just once from the electronic device to the access device.

In the present embodiment, the device operation information programming part in the electronic device is not essential. In other words, the device drive part in the electronic device sometimes starts to operate immediately based on the device operation information that the device operation screen information reception part has honored. In that case, the electronic device includes the operation screen information storage part, the operation screen information transmission part, the device operation screen information reception part and the device drive part.

In addition, as described above, it is unnecessary for the access device to displaying some or all of the electronic device address information and to direct the transmission of the operation screen information based on the user's instruction. Instead, it is possible to move to the next step without the user's instruction by transmitting a URL in which the electronic device address information contains the global IP address of the electronic device to the access device, and by automatically jumping, after a certain time period, to the page (data described in HTML) indicated by the URL. The device control method in that case will be shown as follows. A device control method, which is used in an information processing system having an electronic device, a server device and an access device to access the electronic device, includes:
(a) a step for the access device to honor an access request to the server device;
(b) a step for the access device to transmit a transmission command to the server device identified by a previously stored server device identifier, the transmission command having an access device identifier and directing the transmission of electronic device access information which is information to access the electronic device;
(c) a step for the server device to acquire electronic device address information corresponding to the access device from the electronic device access information stored;
(d) a step for the server device to transmit the electronic device access information containing the electronic device address information to the access device;
(e) a step for the access device to receive the electronic device access information;
(f) a step for the access device to instruct the electronic device to transmit operation screen information based on the electronic device access information received;
(g) a step for the electronic device to transmit the operation screen information stored in response to a transmission instruction of the access device;
(h) a step for the access device to receive the operation screen information;
(i) a step for the access device to display an operation screen based on the operation screen information received;
(j) a step for the access device to honor an input of device operation information of the electronic device in accordance with the operation screen;
(k) a step for the access device to transmit the device operation information to the electronic device;
(l) a step for the electronic device to receive the device operation information; and
(m) a step for the electronic device to operate based on the device operation information.

The behavior of the electronic device, the server device and the access device described in the present embodiment may be implemented by software, and the software may be put on the server to distribute it by being downloaded from the server. It is also possible to distribute the software by storing it in a recording medium such as a CD-ROM.

The program to be executed by a computer in a case of implementing the behavior of the access device by software includes the steps of:
(a) honoring an access request to access a server device;
(b) transmitting a transmission command to the server device identified by a previously stored server device identifier when the access request has been honored, the transmission command having an access device identifier and directing the transmission of electronic device access information which is information to access an electronic device;
(c) receiving the electronic device access information that the server device has transmitted in response to the transmission command;
(d) instructing the electronic device to transmit operation screen information based on the electronic device access information received, and then receiving the operation screen information;
(e) displaying an operation screen based on the operation screen information received;
(f) honoring device operation information entered based on the operation screen displayed; and
(g) transmitting the device operation information to the electronic device.

The present embodiment enables easy and safe programming and operation of the device operation information of an electronic device from outside, and can securely support a device having a dynamically changing global IP address and port number.

In the present embodiment, the electronic device and the router are shown as different devices, they could be integrated.

### INDUSTRIAL APPLICABILITY

As described hereinbefore, the information processing system of the present invention can easily access a specific electronic device from outside, while securing the security.

## Claims

1. An information processing system including an electronic device, a server device and an access device which accesses the electronic device, the information processing system comprising:
(A) the electronic device including:
(A-1) an operation screen information storage part which stores operation screen information that is information to configure a screen for operating one of the electronic device and another electronic device;
(A-2) an operation screen information transmission part which transmits the operation screen information at a request of the access device;
(A-3) a device operation screen information reception part which honors device operation information from the access device; and
(A-4) a device drive part which operates based on the device operation information that the device operation screen information reception part has honored;
(B) the server device including:
(B-1) an access information management part which has a record containing an access device identifier that is information to identify the access device, and electronic device address information that is information to access the electronic device;
(B-2) a transmission command reception part which receives a transmission command having the access device identifier from the access device; and
(B-3) an electronic device access information transmission part for transmitting electronic device access information, which has the electronic device address information corresponding to the access device identifier contained in the transmission command that the transmission command reception part has received, to the access device; and
(c) the access device including:
(C-1) an access device identifier storage part which stores the access device identifier that is the information to identify the access device;
(C-2) a server device identifier storage part which stores a server device identifier that is information to identify the server device;
(C-3) an access request honoring part which honors an access request to the server device;
(C-4) a transmission command transmission part which transmits the transmission command to the server device identified by the server device identifier that the server device identifier storage part stores when the access request honoring part has honored the access request, the transmission command having the access device identifier and directing transmission of the electronic device access information which is the information to access the electronic device;
(C-5) an electronic device access information reception part which receives the electronic device access information that the server device has transmitted in response to the transmission command;
(C-6) an operation screen information reception part which instructs the electronic device to transmit the operation screen information based on the electronic device access information that the electronic device access information reception part has received, and receives the operation screen information;
(C-7) an operation screen display part which displays an operation screen based on the operation screen information that the operation screen information reception part has received;
(C-8) a device operation information honoring part which honors the device operation information entered based on the operation screen that the operation screen display part has displayed; and
(C-9) a device operation screen information transmission part which transmits the device operation information to the electronic device.

2. The information processing system according to claim 1, wherein
the electronic device further includes:
a device operation information programming part which stores the device operation information that the device operation screen information reception part has honored, and
the device drive part operates based on the device operation information that the device operation information programming part has stored.

3. The information processing system according to claim 1 or 2, wherein
the access device further includes:
an electronic device access information display part which displays at least part of the electronic device access information that the electronic device access information reception part has received, and
an operation screen information transmission command honoring part which honors an input with respect to the electronic device access information that the electronic device access information display part has displayed, and
the operation screen information reception part receives the operation screen information by instructing the electronic device to transmit the operation screen information based on the input when the operation screen information transmission command honoring part has honored the input.

4. An electronic device used in an information processing system having an access device,the electronic device comprising: an operation screen information storage part which stores operation screen information that is information to configure a screen for operating one of the electronic device and another electronic device;
an operation screen information transmission part which transmits the operation screen information at a request of the access device;
a device operation screen information reception part which honors device operation information from the access device; and
a device drive part which operates based on the device operation information that the device operation screen information reception part has honored.

5. A server device used in an information processing system including an access device and an electronic device,
the server device comprising:
an access information management part which has a record containing an access device identifier that is information to identify the access device, and electronic device address information that is information to access the electronic device;
a transmission command reception part which receives a transmission command having the access device identifier from the access device; and
an electronic device access information transmission part for transmitting electronic device access information, which has the electronic device address information corresponding to the access device identifier contained in the transmission command that the transmission command reception part has received, to the access device.

6. An access device used in an information processing system including a server device and an electronic device,
the access device comprising:
an access device identifier storage part which stores an access device identifier that is information to identify the access device;
a server device identifier storage part which stores a server device identifier that is information to identify the server device;
an access request honoring part which honors an access request to the server device;
a transmission command transmission part which transmits a transmission command to the server device identified by the server device identifier that the server device identifier storage part stores when the access request honoring part has honored the access request, the transmission command having the access device identifier and directing transmission of electronic device access information which is information to access the electronic device;
an electronic device access information reception part which receives the electronic device access information that the server device has transmitted in response to the transmission command;
an operation screen information reception part which instructs the electronic device to transmit operation screen information based on the electronic device access information that the electronic device access information reception part has received, and receives the operation screen information;
an operation screen display part which displays an operation screen based on the operation screen information that the operation screen information reception part has received;
a device operation information honoring part which honors device operation information entered based on the operation screen that the operation screen display part has displayed; and
a device operation screen information transmission part which transmits the device operation information to the electronic device.

7. A device control method used in an information processing system including an electronic device, a server device and an access device which accesses the electronic device, the device control method comprising the steps of:
(a) honoring an access request to the server device by using the access device;
(b) transmitting a transmission command to the server device identified by a previously stored server device identifier by using the access device, the transmission command having an access device identifier and directing transmission of electronic device access information which is information to access the electronic device;
(c) acquiring electronic device address information corresponding to the access device from the electronic device access information stored, by using the server device;
(d) transmitting the electronic device access information containing the electronic device address information to the access device by using the server device;
(e) receiving the electronic device access information by using the access device;
(f) instructing the electronic device to transmit operation screen information based on the electronic device access information received, by using the access device;
(g) transmitting the operation screen information stored in response to a transmission instruction of the access device by using the electronic device;
(h) receiving the operation screen information by using the access device;
(i) displaying an operation screen based on the operation screen information received, by using the access device;
(j) honoring an input of device operation information of the electronic device in accordance with the operation screen, by using the access device;
(k) transmitting the device operation information to the electronic device by using the access device;
(l) receiving the device operation information by using the electronic device; and
(m) operating the electronic device based on the device operation information.

8. The device control method used in the information processing system according to claim 7, wherein the step (m) comprises the steps of:
(n) storing the device operation information by using the electronic device; and
(o) operating the electronic device based on the device operation information stored.

9. A device control method used in an information processing system including an electronic device, a server device and an access device which accesses the electronic device, the device control method comprising the steps of:
(a) honoring an access request to the server device by using the access device;
(b) transmitting a transmission command to the server device identified by a previously stored server device identifier by using the access device, the transmission command having an access device identifier and directing transmission of electronic device access information which is information to access the electronic device;
(c) acquiring electronic device address information corresponding to the access device from the electronic device access information stored, by using the server device;
(d) transmitting the electronic device access information containing the electronic device address information to the access device by using the server device;
(e) receiving the electronic device access information by using the access device;
(f) displaying at least part of the electronic device access information by using the access device;
(g) honoring an electronic device access command which is an input with respect to a display of the electronic device access information by using the access device;
(h) instructing the electronic device to transmit operation screen information based on the electronic device access command by using the access device;
(i) transmitting the operation screen information stored in response to a transmission instruction of the access device by using the electronic device;
(j) receiving the operation screen information by using the access device;
(k) displaying an operation screen based on the operation screen information received, by using the access device;
(l) honoring an input of device operation information of the electronic device corresponding to the operation screen by using the access device;
(m) transmitting the device operation information to the electronic device by using the access device;
(n) receiving the device operation information by using the electronic device; and
(o) operating the electronic device based on the device operation information.

10. A program for making a computer execute a device control method used in an information processing system, the program comprising the steps of:
(a) honoring an access request to access a server device;
(b) transmitting a transmission command to the server device identified by a previously stored server device identifier when the access request has been honored, the transmission command having an access device identifier and directing transmission of electronic device access information which is information to access an electronic device;
(c) receiving the electronic device access information that the server device has transmitted in response to the transmission command;
(d) instructing the electronic device to transmit operation screen information based on the electronic device access information received, and then receiving the operation screen information;
(e) displaying an operation screen based on the operation screen information received;
(f) honoring device operation information entered based on the operation screen displayed; and
(g) transmitting the device operation information to the electronic device.
